Europäisches Patentamt

European Patent Office

Office européen des brevets

(19)

(11) **EP 0 886 833 B1**

(12) ## EUROPÄISCHE PATENTSCHRIFT

(45) Veröffentlichungstag und Bekanntmachung des Hinweises auf die Patenterteilung:
**05.01.2000 Patentblatt 2000/01**

(51) Int Cl.[7]: **G06K 9/00**, G07C 11/00, A61B 5/117

(21) Anmeldenummer: **97916342.5**

(22) Anmeldetag: **12.03.1997**

(86) Internationale Anmeldenummer:
**PCT/DE97/00488**

(87) Internationale Veröffentlichungsnummer:
**WO 97/34251 (18.09.1997 Gazette 1997/40)**

(54) **VERFAHREN ZUR ERFASSUNG UND SPEICHERUNG GESICHTSBEZOGENER PERSONENDATEN UND DEREN VERWENDUNG ZUR IDENTIFIZIERUNG ODER VERIFIKATION VON PERSONEN**

PROCESS FOR CAPTURING AND RECORDING INDIVIDUALS FACIAL DATA AND THE USE OF SUCH DATA FOR DETERMINING OR CONFIRMING THE IDENTITY OF PERSONS

PROCEDE DE SAISIE ET DE MEMORISATION DE DONNEES PERSONNELLES PHYSIONOMIQUES ET LEUR UTILISATION POUR IDENTIFIER DES INDIVIDUS OU VERIFIER LEUR IDENTITE

(84) Benannte Vertragsstaaten:
**DE FR GB IT**

(30) Priorität: **14.03.1996 DE 19610066**

(43) Veröffentlichungstag der Anmeldung:
**30.12.1998 Patentblatt 1998/53**

(73) Patentinhaber: **plettac electronic security GmbH 90766 Fürth (DE)**

(72) Erfinder:
- **GRIMMBERGER, Mathias**
  **D-01129 Dresden (DE)**
- **JOURJINE, Alexander**
  **D-01187 Dresden (DE)**
- **KUNSTMANN, Niels**
  **D-01139 Dresden (DE)**
- **MÜLLER, Michael**
  **D-01217 Dresden (DE)**
- **WEBER, Frank**
  **D-01099 Dresden (DE)**

(74) Vertreter: **Pröll, Jürgen, Dipl.-Ing. (FH) Rechtsanwälte Stern, Pröll und Dries, Nelson-Mandela-Platz 18 90459 Nürnberg (DE)**

(56) Entgegenhaltungen:
**WO-A-92/08202**

- **SECOND EUROPEAN CONFERENCE ON COMPUTER VISION, 19-22 MAY 1992, SANTA MARGHERITA LIGURE, Bd. 1, Seiten 45-58, XP000578993 BELHUMEUR P N ET AL: "EIGENFACES VS. FISHERFACES: RECOGNITION USING CLASS SPECIFIC LINEAR PROJECTION"**
- **PATTERN RECOGNITION LETTERS, Bd. 17, Nr. 1, 1.Januar 1996, Seiten 67-76, XP000543727 NATHAN INTRATOR ET AL: "FACE RECOGNITION USING A HYBRID SUPERVISED/UNSUPERVISED NEURAL NETWORK"**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

**Beschreibung**

Auf dem Gebiet der Sicherheitstechnik ist es üblich, Personen an Hand von persönlichen Merkmalen zu identifizieren oder zu verifizieren, um ihnen Zugang zu sicherheitsrelevanten Einrichtungen zu gewähren.

Zu diesen persönlichen Merkmalen gehört auch das Gesicht, das zur Erfassung von gesichtsbezogenen Daten von einer Kamera aufgenommen wird. Die digitalen Bilddaten werden dann auf besondere Merkmale hin untersucht und ein entsprechender Graph gebildet, der zum Beispiel in einer Datenbank abgespeichert wird und damit zum Vergleich mit einem jeweils neugebildeten Graphen zur Verfügung steht. Stimmt ein von einer Person neu abgeleiteter Graph mit einem abgespeicherten innerhalb festgelegter Grenzen überein, dann erhält die Person den gewünschten Zugang.

Um den Auswahlvorgang in der Datenbank zu vereinfachen und zu beschleunigen, kann die Abspeicherung unter der von der geheimen PIN (Personal Identity Number) einer Ausweiskarte abgeleiteten Adresse in der Datenbank erfolgen. Auch kann auf eine Abspeicherung in einer Datenbank verzichtet und damit der Speicherbedarf stark reduziert werden, wenn die Gesichtsdaten an Stelle der PIN oder zusammen mit der PIN auf einer IC-Ausweiskarte (Karte mit integriertem Schaltkreis) abgespeichert werden - man siehe z.B.UK 2 173 970 A.

Es ist bereits eine Reihe von Verfahren zur Ableitung der Gesichtsdaten bekannt, wobei die nachfolgende Numerierung sich auf das Literaturverzeichnis am Ende der Beschreibung bezieht.

<u>Zu1</u>:

Der hierin dargestellte Ansatz verwendet zur Erkennung von Gesichtern deren Darstellung in einem Raum von Eigenfaces. Diese Darstellung ist die sogenannte Karhunen-Loéve-Transformation (KLT). Sie erfordert eine große Menge von Trainingsmustern. Es seien diese für Bilder der Größe $N \times N$ als $N^2$-dimensionale Vektoren $\vec{x}$ gegeben. Die Basisfunktionen der KLT erhält man dann durch Lösen des Eigenwertproblems

$$\Lambda = \Phi^{\mathsf{T}} \Sigma \Phi,$$

wobei $\Sigma$ die Kovarianzmatrix der Datenvektoren, $\Phi$ die Eigenvektor-Matrix von $\Sigma$ und $\Lambda$ die Diagonalmatrix der Eigenwerte ist. Man erhält die neue Darstellung von $\vec{x}$ als

$$\vec{y} = \Phi_{M}^{\mathsf{T}}(\vec{x} - \bar{\bar{x}}),$$

wobei $\bar{\bar{x}}$ den Mittelwert aller $\vec{x}$ bezeichnet. $\Phi_M$ ist eine Submatrix von $\Phi$, die die führenden M Eigenvektoren, d. h. die Eigenvektoren zu den M größten Eigenwerten, enthält. In einer derartigen teilweisen KLT beträgt der Rekonstruktionsfehler für ein bestimmtes Muster $\vec{x}$ gerade

$$\varepsilon^2(\vec{x}) = \|\vec{x} - \bar{\bar{x}}\|^2 - \|\vec{y}\|^2$$

Diese Größe wird als "distance from feature space" bezeichnet und zur Lokalisierung des Gesichts innerhalb eines Bildes verwendet.

Solch ein Eigenface-basiertes System kann durch lokale Variation getäuscht werden. Weiterhin erfordert das System eine Normalisierungsstufe, die das Gesicht auf eine Standardgröße bringt. Da das Verfahren auch zur effizienten Kodierung von Gesichtern für die Videoübertragung verwendet wird, ist eine Erfassung mehrerer Bilder eines Gesichts mit nur einem Merkmalssatz prinzipiell nicht möglich.

Es werden daher zwei Erweiterungen vorgeschlagen, die diese Defizite teilweise beheben:

Einerseits wird das Schema der Eigenfaces auf beliebige andere Merkmale, wie z.B. Augen, Nase, Mund etc., des Gesichts ausgedehnt. Werden diese modularen Eigenvektor-Darstellungen mit den Eigenfaces kombiniert, ergibt sich zwar eine bessere Erkennungsleistung, jedoch wird der bei jeder abbrechenden Eigenvektorentwicklung sich ergebende Nachteil, nämlich daß die erneute Berechnung der Eigenvektoren erforderlich wird, sobald neue Gesichter hinzukommen, nicht aufgehoben.

Andererseits wird versucht, mit Hilfe multipler Beobachter eine Erkennung zu realisieren, die von der Kopfrotation der Person unabhängig ist. In dem verwendeten formalen Rahmen bedeutet dies, daß für jeden dieser Beobachter die Koeffizienten der Entwicklung in dem zugehörigen Vektorraum bekannt sein müssen. Multiple Beobachter erfordern also multiple KLT und multiple Kodierungen. Für eine zu erfassende Person sind daher mehrere Datensätze zu speichern, was einen entsprechenden Aufwand an Speicherkapazität und Verarbeitungszeit erfordert

<u>Zu2</u>:

Das hierin beschriebene Verfahren zur Gesichtserkennung basiert im wesentlichen auf der Verwendung eines 2-Kamera-Systems zur Segmentierung. Als Merkmalsdetektoren werden Richtungsableitungen der zweidimensionalen Gaußfunktion verwendet. Der Startpunkt für die Definition und Konstruktion der Merkmalsdetektoren ist die bekannte Gaußfunktion

$$G(x) = \frac{1}{\sqrt{2\pi\sigma^2}} \exp\left(-\frac{x^2}{2\sigma^2}\right).$$

Sie ist um $x$=0 mit einer Varianz $\sigma^2$ lokalisiert. Die einzelnen Detektoren sind Richtungsableitungen von G(x)G(y), dem 2-dimensionalen Analogon von G(x). Man bezeichnet sie üblicherweise mit $G^{\theta_k}$, wobei n die Ordnung der Ableitung und $\theta_k = k\pi/(n + 1)$ mit k= 0,...,n ihre Richtung bezeichnet. Es werden Ableitungen der Ordnung 1 bis 3 verwendet.

Das System arbeitet als Identifikationssystem und die Assoziationsleistung wird von einem spärlich besetzten verteilten topographischen Speicher (SDM) erbracht. Zwar werden zum Training des SDM mehrere Bilder für jede Person verwendet, jedoch ist die erfaßte Information nicht nach Personen separierbar. Daher gibt es keine kompakte Darstellung des Aussehens einer einzelnen Person, wie es in einem Verifikationssystem erforderlich wäre.

**Zu3**:

Das dargestellte System kann nur Folgen von Videobildern bei der Erkennung verarbeiten. Weiterhin werden als die Gesichter unterscheidende Merkmale die Koeffizienten einer Entwicklung der Oberfläche der Gesichter in 3-dimensionale Eigenköpfe verwendet. Somit zeigt das Verfahren die von den Eigenfaces bekannten Vor- und Nachteile.

**Zu4**:

Bei diesem System wird der Vergleich zwischen dem zu erkennenden Bild und dem gespeicherten Bild durch einen flexiblen Abbildungsmechanismus realisiert. Zum Vergleich werden durch unspezifische Merkmalsdetektoren extrahierte lokale Merkmale des Gesichts verwendet. Die Gitterpositionen, an denen die Merkmale extrahiert werden, sind nicht explizit festgelegt, sondern variabel, wobei die Gitterverzerrung in der Vergleichsfunktion enthalten ist.

Die Positionierung der Gitterpunkte ergibt sich als Resultat eines globalen Optimierungsprozesses mit der Kostenfunktion

$$E = E_{sim} + \lambda E_{top},$$

wobei der erste Term $E_{sim}$ die Ähnlichkeit extrahierter Merkmalsvektoren (Jets) an jeweils korrespondierenden Gitterpositionen und der zweite Term $E_{top}$ die Gitterverzerrungskosten quantifiziert. Hier wird also ein bewegliches Gitter verwendet.

Dieses Verfahren hat daher folgende Nachteile:

Es funktioniert nicht bei komplexen Hintergründen, da das Gitter mit den Merkmalsdetektoren nicht ausschließlich das Gesicht überdeckt. Auch besteht innerhalb des formalen Rahmens keine Möglichkeit, mehrere Bilder mit nur einem Merkmalssatz zu erfassen. Weiterhin kann wegen der Vernachlässigung von Phaseninformation in der Konstruktion der Jets der Referenzdatensatz nicht zur Rekonstruktion des Gesichts verwendet werden.

**Zu5**:

Das in der Patentschrift erwähnte Verfahren zur Erfassung und Wiedererkennung von Gesichtern basiert ebenso wie (1) auf dem Eigenface-Ansatz und ist somit ebenso nicht zur Erfassung mehrerer Bilder einer Person in einem kompakten Code geeignet. Als "Merkmale" gelten hier wie auch im modularen Ansatz von (1) tatsächliche, für den Menschen sichtbare und klar definierte Teile des Gesichts, wie z.B. Augen oder Augenbrauen. Außerdem wird ein dualer Code verwendet, der einerseits die absolute Position eines Merkmals ("offset") andererseits deren spezifisches Aussehen ("reference vertex") beschreibt. Um diese Merkmale zu finden, werden "intelligente" Mustererkennungstechniken (Stichwort "snake") angewandt.

**Zu6**:

Das hier beschriebene Verfahren erweitert den in (4) beschriebenen Ansatz um eine Gewichtung der Gitterpositionen.

Diese Gewichtung ist eindeutig für eine bestimmte Aufgabe und modifiziert die bisherige Ähnlichkeitsfunktion. Die Gewichte sind daher nicht Bestandteil des Referenzdatensatzes für eine erfaßte Person. Weiterhin erfolgt keine Spezifikation der Qualitätsfunktion Q zur Optimierung der Gewichte. Es ist lediglich angegeben, daß die Datenmenge T , die der Optimierung zugrunde liegt, nur jeweils Paare von Bildern verschiedener Personen enthält. Damit kann allenfalls ein konventionelles Erkennungsexperiment durchgeführt werden, und die Berücksichtigung mehrerer Bilder bei der Erfassung ist ausgeschlossen. Die Gitterpositionen selbst ergeben sich vergleichbar dem Verfahren nach (4) als Resultat eines globalen Optimierungsprozesses, der das gesamte Gitter umfaßt. Die Lage eines einzelnen Gitterpunktes ist also nicht Resultat eines expliziten Detektionsprozesses und somit an die Existenz eines lokalen Merkmals gebunden, sondern ergibt sich aus dem kooperativen Verhalten des beweglichen Gitters.

**Zu7**:

Hier wird ein Identifikationsverfahren beschrieben, das ein künstliches neuronales Netz zur Klassifikation von Gesichtern benutzt. Dabei handelt es sich um ein Feed-forward-Netz mit einer internen Knotenschicht und einem Eingabeknoten für jedes der Pixel, aus dem das Eingabebild besteht. Ein solches Eingabebild wird aus einem dem System präsentierten Bild eines Gesichts durch eine Vorverarbeitungsstufe gewonnen, in der die Mittelpunkte der Augen und des Mundes ermittelt werden und das Bild durch eine affine Transformation so bearbeitet wird, daß diese Mittelpunkte auf vordefinierte Punkte abgebildet werden. Zur Vorverarbeitung gehört auch die Eliminierung globaler Intensitätsgradienten im Bild des Gesichts mit dem ziel, eine größere Unabhängigkeit vom Ort der Lichtquelle zu erreichen.

Das Training des neuronalen Netzes erfordert die Verwendung von Bildern jeder Person, die das Netz klassifizieren soll.

Die Klassifikationsfunktion ist dann für alle diese Personen gemeinsam in den Gewichten des Netzes kodiert. Dies hat, analog zu (1), den Nachteil, daß das Netz neu trainiert werden muß, sobald weitere Personen aufgenommen werden sollen. Ferner muß in diesem Fall zur Bewahrung einer akzeptablen Erkennungsleistung möglicherweise die Zahl er internen Knoten erhöht werden; denn laut (7) genügten in einem Experiment zwar 12 interne knoten für 16 Personen, es ist aber unklar, wie das Verfahren mit der Zahl der Personen skaliert. Ein weiterer Nachteil ist, daß einer Person kein eigener Referenzdatensatz zugeordnet werden kann und somit eine externe Speicherung eines solchen Datensatzes -etwa auf einer Chipkartenicht möglich ist.

Die Erfindung hat ein Verfahren zur Erfassung und Speicherung von gesichtsbezogenen Personendaten und deren Verwendung zur Identifizierung oder Verifikation in Zugangskontrollsystemen zum Gegenstand, das Merkmale der vorangehend genannten Systeme aufgreift und wesentlich erweitert, sowie eine schnelle und robuste Erkennung von menschlichen Gesichtern aus Standbildern unter natürlicher Beleuchtung ermöglicht.

Ein entsprechendes Verfahren ergibt sich aus den Merkmalen des Anspruches 1.

Danach werden die gesichtsbezogenen Daten nicht von einem einzigen Bild, sondern von einer Reihe von Bildern der zu erfassenden Person abgeleitet. In jedem Bild wird versucht, zunächst das Gesicht und dann die Augen zu lokalisieren. Bei Erfolg wird das Bild anschließend derart rotiert und skaliert, daß danach die Augen innerhalb des Bildes auf einer horizontalen Linie liegen und einen vorgegebenen Abstand haben. Dem so normalisierten Bild wird ein festes Gitter überlagert, dessen Lage relativ zu den Augenpositionen von vornherein festgelegt ist. Im Gegensatz zu (4) sind daher Größe, Form und -bei einem regelmäßigen Gitter- die Maschenweite des Gitters stets gleich. Das Gitter wird an den Augen verankert, weil diese von den Gesichtsmerkmalen am einfachsten zu lokalisieren sind.

Für jedes aufgenommene Bild i werden dabei d bestimmte Merkmalsdetektoren, z.B. solche wie in (2), an jedem Gitterpunkt g und für jede Auflösungsstufe k einer festen Menge von Auflösungsstufen des Bildes angewandt, so daß sich d-dimensionale Vektoren $\vec{m}_i^{(g,k)}$ ergeben. Ein Merkmal ist hier eine Komponente eines solchen Vektors und daher im Gegensatz zu (5) die Antwort eines unspezifischen Merkmalsdetektors. Damit sind die Merkmale im Gesicht nicht klar lokalisiert, sondern man könnte sie stattdessen als delokalisiert bezeichnen.

Im nächsten Schritt werden jeweils mehrere Vektoren $\vec{m}_i^{(g,k)}$ zu neuen Vektoren zusammengefaßt, die im folgenden als Merkmalsvektoren bezeichnet werden. Hierbei gibt es verschiedene Möglichkeiten: Beispielsweise kann die Zusammenfassung für jeden Gitterpunkt über mehrere Auflösungsstufen oder für jede Auflösungsstufe über mehrere Gitterpunkte erfolgen; denkbar ist auch eine Kombination dieser beiden Techniken. Die einfachste Möglichkeit ist, als Merkmalsvektoren die Vektoren $\vec{m}_i^{(g,k)}$ selbst zu verwenden.

In jedem Falle existieren nach der Zusammenfassung Merkmalsvektoren $\vec{n}_i^q$, q = 1,...,$N_q$, wobei $N_q$ die Zahl der Merkmalsvektoren bezeichnet. Vor der weiteren Verarbeitung sind die Merkmalsvektoren auf Länge 1 zu normieren; im folgenden wird daher angenommen, daß $(\vec{n}_i^q)^2$=1 gilt.

In einem Mittelungsprozeß werden diese Sätze von Merkmalen aller aufgenommenen Bilder zu einem repräsentativen Referenzmerkmalssatz zusammengefaßt. Dieser repräsentative Referenzmerkmalssatz kann durch unterschiedliche Mittelungsschemata erzeugt werden. Betrachtet man nämlich $\vec{n}_i^q$ als Satz normierter Merkmalsvektoren einer festen Person für die unterschiedlichen Trainingsbilder i=1,...,N und für ein festes q, so erhält man (im Folgenden ist zur Vereinfachung der Notation der Index q weggelassen) einen repräsentativen Datensatz

$$\vec{n} = \sum_i \lambda_i \vec{n}_i$$

durch die Minimierung einer Funktion V, die die Breite der Selbstähnlichkeit $p_{ij} = \vec{n}_i \cdot \vec{n}_j$ aller Merkmalsvektoren quantifiziert, wobei die Normalisierungsnebenbedingung $\vec{n}^2$=1 eingehalten werden muß. Im Fall

$$V \simeq \sum_i \vec{n} \cdot \vec{n}_i$$

ergibt sich

$$\vec{n} \propto \sum_i \vec{n}_i \ ,$$

während sich für

$$V = \sum_i \left( \vec{n} \cdot \vec{n}_i \right)^2$$

die Koeffizienten $\vec{\lambda}$ als Eigenvektor der Matrix P = ($p_{ij}$) ergeben, der zum größten Eigenwert gehört. Diese Art Eigenvektor hat aber nichts mit einer KLT zu tun.

Alternativ kann derjenige Merkmalssatz unter den Merkmalssätzen der aufgenommenen Bilder als neuer repräsentativer Referenzmerkmalssatz bestimmt und verwendet werden, der den kleinsten Abstand, z.B. den kleinsten euklidischen Abstand, zu dem nach einer der vorhergehend beschriebenen Methoden ermittelt wurde.

Die Gesamtähnlichkeit eines Referenzmerkmalssatzes zu dem Merkmalssatz aus Bild i ergibt sich als gewichtete Summe der einzelnen Ähnlichkeiten

$$p_i^{\ q} = \vec{n}_i^{\ q} \cdot \vec{n}^{\ q}$$

zum jeweiligen Referenzmerkmalsvektor $\vec{n}^{\ q}$ in der Form

$$s(i) = \sum_q w_q p_i^{\mathbf{q}} \ .$$

Die einzelnen Gewichte sind nicht negativ und ihre Summe beträgt 1.

Zusätzlich können auch die einzelnen Merkmale gewichtet werden. Dazu wird jedem Referenzmerkmalsvektor $\vec{n}^{\ q}$ eine Diagonalmatrix $C_q$ zugeordnet, deren Diagonalelemente die Gewichte für jede Komponente von $\vec{n}^{\ q}$ und damit für jedes einzelne Merkmal darstellen. Die Gewichtung erfolgt dann durch Multiplikation der Matrix mit dem Referenzmerkmalsvektor. Auch der gewichtete Referenzmerkmalsvektor muß auf Länge 1 normiert sein, d.h. es muß $(C_q\vec{n}_q)^2=1$ gelten. Die einzelnen Ähnlichkeiten $p_i^q$ ergeben sich dann nach folgender Gleichung:

$$p_i^{\ q} = \vec{n}_i^{\ q} \cdot C_q\vec{n}_q$$

Die Berechnung von personenabhängigen Gewichten, die ebenfalls Teil der später abgespeicherten gesichtsbezogenen Daten sind, ist auf die spezielle Aufgabe zugeschnitten und berücksichtigt Informationen aus den aufgenommenen Bildern und einer Hintergrunddatenbank von Merkmalssätzen, was im Folgenden beschrieben wird.

Das Ziel jeden Verifikations- oder Identifikationssystems ist, gleichzeitig die Rate der falschen Zurückweisungen (false rejection rate, FRR, $\chi^{(1)}$ ) und die Rate der falschen Akzeptierungen (false acceptance rate, FAR, $\chi^{(2)}$ ) möglichst gering zu halten. In unserem System sind beides Funktionen der Akzeptanzschwelle $\lambda$ und definiert als

$$\chi^{(1)}(\lambda) = \frac{1}{N_A} \sum_{i=1}^{N_A} \theta\left(\lambda - \sum_{q=1}^{N_g} w_q p_i^{\mathbf{q}}\right)$$

$$\chi^{(2)}(\lambda) = \frac{1}{N_B} \sum_{j=1}^{N_B} \theta\left(\sum_{q=1}^{N_g} w_q r_j^{\mathbf{q}} - \lambda\right)$$

mit $\theta(x)$ als Heavisidesche Stufenfunktion. Hier ist $N_A$ die Anzahl der unterschiedlichen Bilder von Person A , die bei der Erfassung aufgenommen werden, während $N_B$ die Anzahl der Merkmalssätze von Bildern anderer Personen in der Hintergrunddatenbank ist. $p_i^q$ bezeichnet die Ähnlichkeit des Merkmalsvektors $\vec{n}_i^q$ des Bildes i von Person A zum Referenzmerkmalsvektor $\vec{n}^q$ und $r_j^q$ den entsprechenden Wert für eine Person B $\neq$ A.

Das oben genannte Ziel kann durch Bestimmung solcher personenabhängigen Gewichte erreicht werden, die eine geeignete Zielfunktion optimieren. Sinnvolle Zielfunktionen sind beispielsweise die Summe der beiden Fehlerraten (FAR und FRR) oder die Gleichfehlerrate (equal error rate, EER), der Funktionswert also, für dessen Argument FAR und FRR gleich sind. Eine andere Zielfunktion geht direkt aus von der Menge der Gesamtähnlichkeiten zwischen dem Referenzmerkmalssatz von Person A und den Bildern von A

$$(p_i = \Sigma_q \ w_q p_i^{\ q})$$

sowie von der Menge der Gesamtähnlichkeiten zwischen diesem Referenzmerkmalssatz und den Merkmalssätzen aus der Hintergrunddatenbank

$$(r_j = \Sigma_q \ w_q r_j^{\ q})$$

und quantifiziert das Ausmaß der Trennung dieser Mengen:

$$f(w) = \frac{\bar{p}_i - \bar{r}_j}{\sqrt{\text{Var}(p_i) + \text{Var}(r_j)}}$$

Hierbei bezeichnen $\bar{p}_i$ und $\bar{r}_j$ die jeweiligen Mittelwerte der Gesamtähnlichkeiten über alle i bzw. j sowie $\text{Var}(p_i)$ und $\text{Var}(r_j)$ die jeweiligen Varianzen.

Alle drei genannten Zielfunktionen ergeben sich bei gegebenen p und r als Funktionen der Gewichte. Zusätzlich zu den Gewichten muß noch der optimale Schwellwert bestimmt werden: Bei den beiden erstgenannten Zielfunktionen ergibt er sich bei der Optimierung der Gewichte, bei der dritten Zielfunktion kann er nach der Gewichtsoptimierung z.B. als Ort der Gleichfehlerrate gewählt werden.

Verfahren zur Optimierung multivariabler Funktionen sind wohlbekannt und sind z. B. in "Numerical Recipes in C" von Press et al., Cambridge University Press, 2. Auflage, 1993 beschrieben.

Abgesehen von den bereits in Verbindung mit Merkmalen des Patentanspruches 1 angesprochenen Varianten zu einzelnen Verfahrensschritten beziehen sich andere Weiterbildungen der Erfindung gemäß den Unteransprüchen z.B. auf die Durchführung der Optimierung erst nach Hinterlegung der Merkmalssätze einer vorgegebenen Anzahl von Personen in der Hintergrunddatenbank, um die Unterscheidungsfähigkeit des Systems zu erhöhen.

Weiterhin kann beim Normalisieren des Gesichts zusätzlich die Lage der Nase für die Bestimmung der Gitterpunktpositionen verwendet werden.

Die Vorverarbeitung der aufgenommenen Bilder mit einem Tiefpaßfilter fördert die Rauschunterdrükkung.

Auch kann die Leistungsfähigkeit eines Erkennungssystems im laufenden Betrieb verbessert werden, indem Bilder, die beim Versuch einer Verifizierung oder Identifizierung aufgenommen worden sind und zu einer Zurückweisung geführt haben, von einer externen Instanz, etwa einem Systemverwalter, gesichtet werden. Diese Instanz entscheidet dann darüber, ob die Zurückweisung zu Recht erfolgt ist oder nicht. Bei einer nicht zulässigen Zurückweisung wird der Merkmalssatz des zugehörigen Bildes zu der Menge der bereits vorliegenden Merkmalssätze von Bildern der betroffen Person hinzugefügt. Danach werden die Berechnung des Referenzmerkmalssatzes und die Optimierung der Gewichte und des Schwellwertes wiederholt.

Einzelheiten der Erfindung seien nachfolgend an Hand von in der Zeichnung dargestellten Ausführungsbeispielen näher erläutert. Im Einzelnen zeigen

FIG 1　ein Blockschaltbild für die Erfassung von Gesichtsdaten,

FIG 2　ein Blockschaltbild zur Personenidentifizierung bzw. -verifikation im Rahmen einer Zugangskontrolle,

FIG 3A　ein Flußdiagramm des Erfassungsprozesses,

FIG 3B　ein Flußdiagramm des anschließenden Optimierungsprozesses und

FIG 4　ein Flußdiagramm für eine Verifikation.

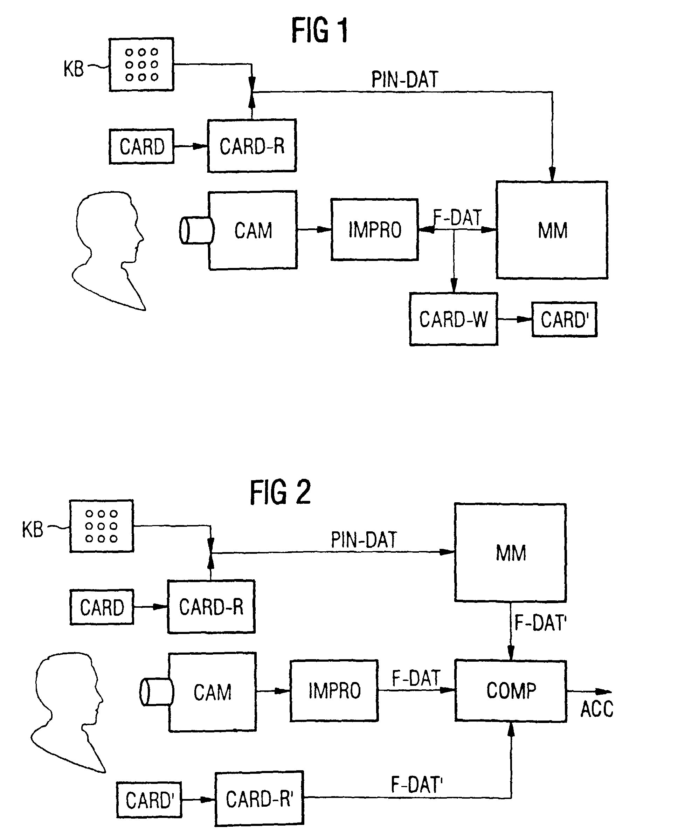

Das Blockschaltbild von FIG 1 zeigt im unteren Teil die wesentlichen Elemente für die Erfassung von Gesichtsdaten, nämlich eine elektronische Kamera CAM, die über einen sogenannten Framegrabber Bilddaten in digitalisierter Form an eine Bildverarbeitungseinheit IMPRO liefert. Diese ermittelt mit Hilfe der Daten aus einer Hintergrunddatenbank für Merkmalssätze im Speichersystem MM die abzuspeichernden Gesichtsdaten F-DAT und übergibt diese wiederum dem Speichersystem MM, wo sie als Referenzdaten in einer Datenbankabgelegt werden. Die Abspeicherung kann aber auch auf einer persönlichen Ausweiskarte CARD' durch einen Kartenschreiber CARD-W erfolgen, so daß der Aufwand für die Referenzdatenbank zum Zwecke der Verifikation und/oder Identifizierung entfällt.

Bei einer Abspeicherung im Speichersystem MM ist dieses ohne oder mit einem persönlichen Bezug zur jeweiligen Person möglich. Letzteres wird durch eine persönliche Identifikationsnummer (PIN) gesteuert, die als Adresse PIN-DAT für das Speichersystem MM entweder von einer Ausweiskarte CARD über einen Kartenleser CARD-R geliefert oder mit Hilfe der Tastatur KB eingegeben wird.

FIG 2 zeigt in Anlehnung an FIG 1 ein Blockschaltbild für die Personenidentifizierung bzw. -verifikation im Rahmen der Zugangskontrolle für ein gesichertes Objekt, wobei das Objekt ein Raum oder eine Maßnahme sein kann. Wesentliche Elemente sind in diesem Falle wiederum die elektronische Kamera CAM und die Bildverarbeitungseinheit IMPRO, die wie bei der Erfassung Gesichtsdaten F-DAT liefert. Hinzu kommt eine als Vergleicher arbeitende Steuereinheit COMP, die die neu erfaßten Gesichtsdaten F-DAT mit den früher erfaßten und als Referenzdaten abgespeicherten Gesichtsdaten F-DAT' vergleicht und bei ausreichender Übereinstimmung ein Steuersignal ACC auslöst, das den Zugang zum gesicherten Objekt erlaubt.

In Anlehnung an die hinsichtlich FIG 1 aufgezeigten Möglichkeiten können die gespeicherten Gesichtsdaten F-DAT' z.B. der Datenbank im Speichersystem MM entnommen werden. Erfolgte die Abspeicherung ohne Personenbezug, dann muß gegebenenfalls die gesamte Datenbank durchsucht werden. Im anderen Fall liefert die Tastatur KB oder die persönliche Ausweiskarte CARD über den Kartenleser CARD-R analog dem oberen Teil von FIG 1 die Adresse PIN-DAT, so daß die zugehörigen Gesichtsdaten F-DAT' unmittelbar ohne langwierigen Suchvorgang bereitgestellt werden können.Bei Verwendung der persönlichen Ausweiskarte CARD' als Speichermedium für die Gesichtsdaten F-DAT' werden diese über den Kartenleser CARD-R' der Steuereinheit COMP zur Verfügung gestellt.

Die für die Erfassung und für die Identifizierung/Verifikation benötigten Elemente von FIG 1 und FIG 2 können entsprechend den gleichlautenden Bezeichnungen auch in einer Anordnung zusammengefaßt werden, wobei der die neuen Gesichtsdaten F-DAT liefernde Ausgang der Bildverarbeitungseinheit IMPRO entweder auf das Speichersystem MM bzw. den Kartenschreiber CARD-W oder aber auf die Steuereinheit COMP umschaltbar ist. Weiterhin ist zu berücksichtigen, daß zur Erfassung immer mehrere Bilder aufgenommen werden, während bei der Identifizierung oder Verifikation nur ein einziges Bild benötigt wird.

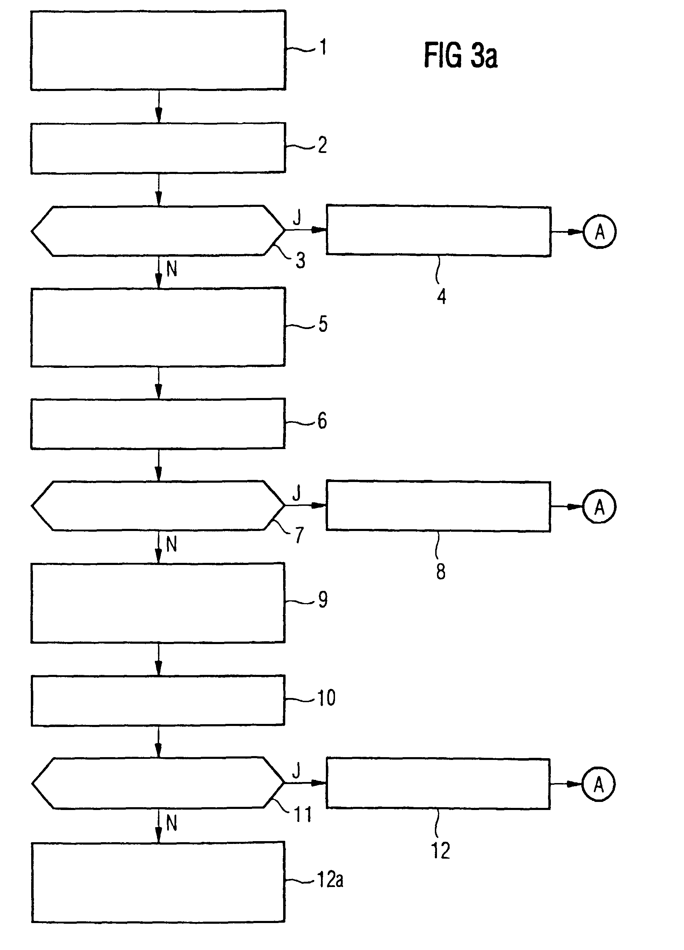

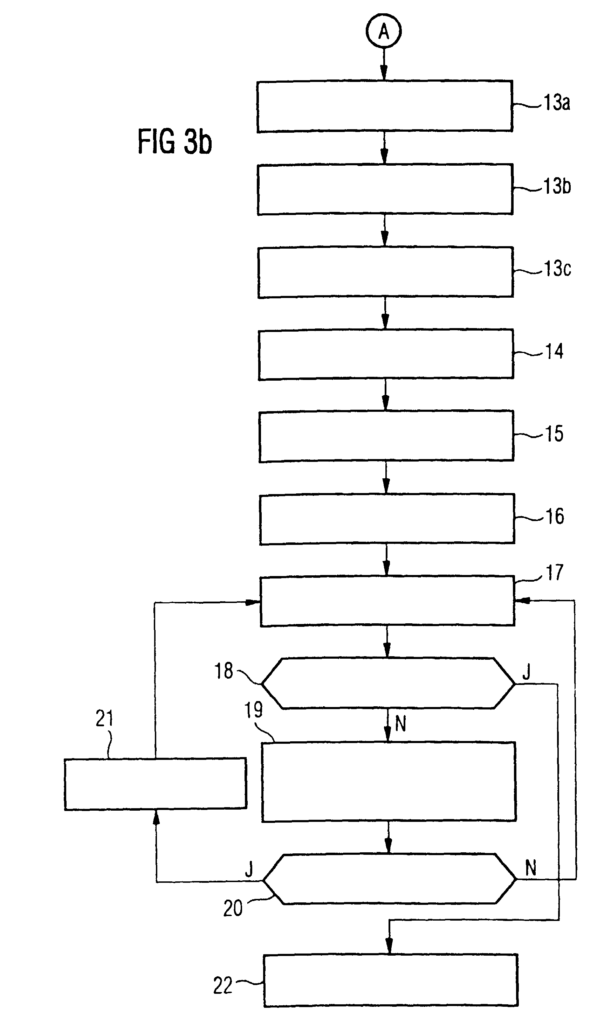

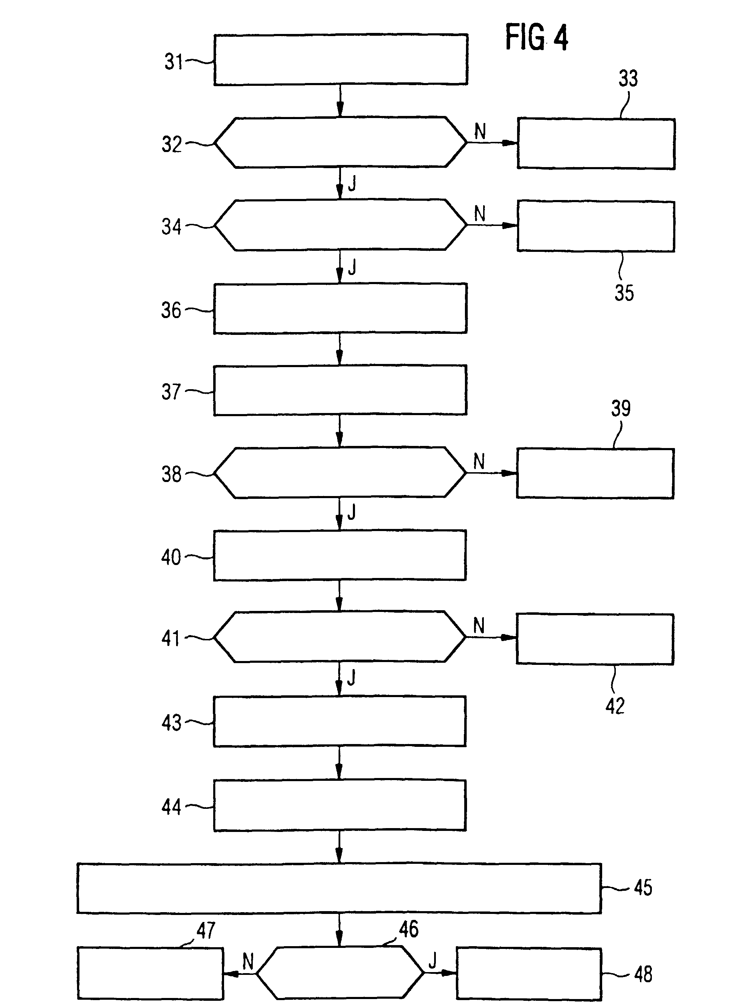

Eine mögliche Arbeitsweise der Anordnungen von FIG 1 und FIG 2 sei nachfolgend an Hand der Flußdiagramme von FIG 3 und FIG 4 näher erläutert. In diesen Flußdiagrammen sind die einzelnen Verfahrensschritte fortlaufend numeriert und die nachfolgende Erläuterung ist entsprechend dieser Numerierung gegliedert.

Mit Bezug auf FIG 3A sind das folgende Verfahrensschritte:

　　1. Innerhalb der durch das System vorgegebenen Zeit von 10 Sekunden werden acht Bilder aufgenommen. Bei jedem zweiten Bild wird dabei versucht, sofort die Augen zu lokalisieren.

2. Es werden alle Bilder mit Ausnahme der Bilder gespeichert, bei denen vergeblich versucht wurde , die Augen zu lokalisieren. Die ermittelten Augenpositionen werden ebenfalls abgespeichert.

3. Die extrahierten Augenpositionen dienen dann zur Beurteilung, ob der Erfassungsprozeß erfolgreich war. Ein Erfassungsprozeß ist erfolgreich, falls die Augen in mindestens drei der vier Bilder gefunden wurden und gleichzeitig die Varianz der extrahierten Augenpositionen eine Schwelle überschreitet.

4. Sollte dies der Fall sein, ist die Erfassung beendet.

5. Im anderen Fall werden zuerst die alten Bilder und die ermittelten Augenpositionen verworfen und wiederum acht Bilder aufgenommen, von denen vier der Augenfindung unterworfen werden. Wie bei der vorhergehenden Gruppe von acht Bildern wird die Varianz der Augenpositionen berechnet.

6. Es werden wiederum alle Bilder mit Ausnahme der Bilder gespeichert, bei denen vergeblich versucht wurde , die Augen zu lokalisieren.

7. Entsprechend Schritt 3 wird mit Bezug auf alle gespeicherten Bilder geprüft, ob die Erfassung erfolgreich war.

8. Im positiven Fall ist die Erfassung beendet.

9. siehe Schritt 5.

10. siehe Schritt 6.

11. siehe Schritt 7.

12. siehe Schritt 8.

12a. Falls die in Schritt 3 erwähnten Bedingungen nach keinem der drei Erfassungsschritte erfüllt wurde, gilt die Erfassung als nicht erfolgreich, und der Benutzer wird entsprechend informiert.

Bei erfolgreich abgeschlossener Erfassung der vorgegebenen Anzahl von Bildern wird mit (A) auf die Merkmalsextraktion und den Optimierungsprozeß von FIG 3B übergeleitet:

13a. Bei den abgespeicherten Bildern, bei denen bisher keinerlei Verarbeitung durchgeführt wurde, wird nun versucht, das Gesicht und dann die Augen zu lokalisieren. Bilder, bei denen dieses nicht möglich ist, werden verworfen, und es werden die Augenpositionen zu den übrigen Bildern abgespeichert.

13b. Bei allen danach gültigen Bildern werden die Position und die Skalierung des Gesichts bezüglich der Augenpositionen normalisiert, indem das jeweilige Bild rotiert und skaliert wird, bis die Augen innerhalb des Bildes auf einer horizontalen Linie liegen und einen vorgegebenen Abstand aufweisen.

13c. Für alle Bilder werden auf verschiedenen Auflösungsstufen und an jedem Gitterpunkt die Merkmalsvektoren bestimmt.

14. Auf jeder Auflösungsstufe werden an jedem Gitterpunkt ein Referenzmerkmalsvektor durch Mittelung über die entsprechenden Merkmalsvektoren der einzelnen Bilder und anschließende Renormalisierung bestimmt.

16. Für alle Auflösungsstufen wird die EER (equal error rate = Gleichfehlerrate, Kreuzungspunkt der Kurven für falsche Akzeptanz und falsche Zurückweisung) des Referenzmerkmalssatzes berechnet und unter EER(i) abgespeichert. Auch die zughörigen Schwellwerte werden bestimmt. Die Datenbank für diese Berechnung besteht aus den Merkmalssätzen aller bei der Erfassung akzeptierten Bilder und einer Hintergrunddatenbank von Merkmalen für andere Personen.

17. Der Schleifenzähler i wird um 1 erhöht.

18. Sollte die maximale Anzahl von Schleifendurchläufen überschritten sein, ist die Optimierung beendet und es wird mit Schritt 22 fortgesetzt.

19. Wahl einer zufälligen Kombination von Gewichten für die Gitterpunkte. Für die zufällige Wahl der Gewichte werden dann die EERs und die Schwellwerte auf allen Auflösungsstufen berechnet. Die jeweiligen Resultate werden als EER(i) abgespeichert.

20. Falls auf den einzelnen Auflösungsstufen die neuen Fehlerraten geringer sind als die alten, als beste gespeicherten, so wird mit Schritt 21 fortgesetzt, im anderen Fall mit Schritt 17.

21. Die neuen Gewichte mit geringster EER sowie die Schwellen für jede Auflösungsstufe werden gespeichert.

22. Nach Beendigung der Optimierung werden die Gewichte der Gitterpunkte für die niedrigste EER gespeichert. Ebenfalls gespeichert wird die Auflösungsstufe, auf der diese niedrigste Rate auftrat, sowie der zugehörige personenabhängige Schwellwert. Bei Gleichstand wird die höhere Auflösungsstufe gewählt.

Das Verfahren für die Verifikation einer Person umfaßt gemäß dem Flußdiagramm von FIG 4 folgende Schritte:

31. Die geheime PIN (personal identification number, persönliche Identifikationsnummer) der Person wird eingelesen.

32. Es wird kontrolliert, ob es sich um eine gültige Benutzernummer handelt.

33. Falls die Nummer dem System nicht bekannt ist, wird die Person zurückgewiesen.

34. Es wird kontrolliert, ob die eingegebene Nummer zu einer autorisierten Person gehört.

35. Sollte das nicht der Fall sein, wird die Person ebenfalls abgewiesen.

36. Im anderen Fall nimmt die Kamera ein Bild von der Person auf, das über einen Framegrabber an den Computer einer Bildverarbeitungseinheit weitergegeben wird.

37. Im aufgenommenen Bild wird versucht, ein Gesicht zu lokalisieren.

38. Das Ergebnis der Gesichtslokalisierung wird bewertet.

39. Wenn kein Gesicht gefunden wurde, wird die Person abgewiesen.

40. Im anderen Fall versucht der Augenfinder, innerhalb des Bildes Augen zu finden.

41. Das Ergebnis der Augenfindung wird bewertet.

42. Falls keine Augen gefunden wurden, wird die Person abgewiesen.

43. Die Position und die Skalierung des Gesichts werden bezüglich der Augenpositionen normalisiert. Nach der Normalisierung liegen die Augen innerhalb des Bildes auf einer horizontalen Linie und haben einen festen, vorgegebenen Abstand. Dazu wird das Bild rotiert und skaliert.

44. Die Merkmale werden auf der Auflösungsstufe extrahiert, die für die entsprechende Person während der Erfassung als optimal ermittelt wurde.

45. Zwischen dem Satz der Referenzmerkmale und den aus dem aktuellen Bild extrahierten Merkmalen wird die Ähnlichkeit berechnet. Dabei werden die als optimal bestimmten Gewichte der Gitterpunkte berücksichtigt.

46. Die ermittelte Ähnlichkeit wird mit der personenspezifischen Schwelle verglichen.

47. Falls die Ähnlichkeit unterhalb der erforderlichen Schwelle liegt, wird die Person zurückgewiesen.

48. Falls die Ähnlichkeit über der Schwelle liegt, wird die Person akzeptiert.

Analoges gilt für die Identifizierung des Gesichts einer unbekannten Person mit Bezug darauf, ob die Person in der Datenbank für erfaßte Personen enthalten ist oder nicht.

Literaturverzeichnis:

1. B. Moghaddam und A. Pentland: "Face Recognition using View-Based and Modular Eigenspaces", Automatic Systems for the Identification and Inspection of Humans, SPIE Vol. 2277, Juli 1994

2. R.P.N. Rao und D.H. Ballard: "Natural Basis Functions and Topographic Memory for Face Recognition",Proceedings of the International Joint Conference on Artificial Intelligence (IJCAI), 1995, pp.10-17

3. J.J. Atick, P.A. Griffin, A.N. Redlich: "Statistical Approach to Shape from Shading: Reconstruction of 3D Face Surfaces from Single 2D Images", Neural Computation 8, pp.1321-1340, 1996

4. W.Konen, E.Schulze Krüger:"ZN-Face: A system for access control using automated face recognition", International Workshop on automatic Face- and Gesture-Recognition, Zürich, June 26.-28., 1995, pp.18-23. Dazu auch DE 44 06 020 C1

5. PCT-Anmeldung Wo 92/02000 A1

6. Mustererkennung 1995, Informatik aktuell, Springer Verlag, S. 110 - 117

7. N. Intrator, D. Reisfeld, Y Yeshurun: "Face recognition using a hybrid supervised/unsupervised neural network", Pattern Recognition Letters 17 (1996), No. 1, pp. 67-76.

**Patentansprüche**

1.  Verfahren zur Erfassung gesichtsbezogener Personendaten, **gekennzeichnet durch** folgende Verfahrensschritte:

    - Aufnahme mehrerer Standbilder von der zu erfassenden Person (1 bis 12a),
    - Lokalisieren des Gesichtes in den aufgenommenen Bildern,
    - Lokalisieren der Augen im lokalisierten Gesicht (1, 5, 9, 13a),
    - Normalisieren des Gesichts durch Rotieren und Skalieren des jeweiligen Bildes, bis die Augen innerhalb des Bildes auf einer horizontalen Linie mit vorgegebenem Abstand liegen (13b),
    - Extraktion von Merkmalen durch Merkmalsdetektoren mit Bezug auf Gitterpunkte eines festen Gitters, wobei die Positionen der Gitterpunkte relativ zur Lage der Augen vorbestimmt sind, mit Zusammenfassung der Merkmale zu einem Merkmalssatz für das jeweilige Bild (13c),
    - Berechnung eines repräsentativen Referenzmerkmalssatzes, der die Merkmalssätze aller aufgenommenen Bilder auf kompakte Weise zusammenfaßt (14),
    - Optimierung von personenabhängigen Gewichten für jeden Referenzmerkmalssatz zwecks Optimierung einer Zielfunktion, die eine Funktion dieser Gewichte sowie der Ähnlichkeitswerte zwischen dem Referenzmerkmalssatz und denjenigen Merkmalssätzen darstellt, die aus den aufgenommenen Bildern derselben Person und den Bildern anderer Personen aus einer Hintergrunddatenbank gewonnen wurden, mit Bestimmung einer optimalen Akzeptanzschwelle (15 bis 21),
    - Abspeicherung der so ermittelten gesichtsbezogenen Daten der erfaßten Person (22).

2.  Verfahren nach Anspruch 1, **dadurch gekennzeichnet**, daß die Optimierung erst durchgeführt wird, wenn in der Hintergrunddatenbank die Merkmalssätze einer vorgegebenen Anzahl von Personen hinterlegt sind.

3. Verfahren nach Anspruch 1 oder 2, **dadurch gekennzeichnet**, daß die Berechnung des repräsentativen Referenzmerkmalssatzes mittels Durchschnittsbildung und Normalisierung mit Bezug auf alle Bilder der zu erfassenden Person erfolgt (14).

4. Verfahren nach Anspruch 1 oder 2, **dadurch gekennzeichnet**, daß die Berechnung des repräsentativen Referenzmerkmalssatzes mittels Ableitung des Eigenvektors zum größten Eigenwert der Ähnlichkeitsmatrix erfolgt.

5. Verfahren nach Anspruch 3 oder 4, **dadurch gekennzeichnet**, daß derjenige Merkmalssatz S von den Merkmalssätzen der aufgenommenen Bilder bestimmt wird, der im mathematischen Raum der Merkmalssätze den kleinsten Abstand zu dem repräsentativen Referenzmerkmalssatz aufweist, und daß im weiteren Verfahrensablauf dieser Merkmalssatz S als der repräsentative Referenzmerkmalssatz verwendet wird.

6. Verfahren nach einem der Ansprüche 1 bis 5, **dadurch gekennzeichnet**, daß beim Normalisieren des Gesichts die Lage der Nase zusätzlich berücksichtigt wird und daß die Positionen der Gitterpunkte zusätzlich durch die Lage der Nase bestimmt werden.

7. Verfahren nach einem der Ansprüche 1 bis 6, **dadurch gekennzeichnet**, daß zur Rauschunterdrückung jedes aufgenommene Bild vor dem Lokalisieren des Gesichts mit einem Tiefpaßfilter bearbeitet wird.

8. Verfahren nach einem der Ansprüche 1 bis 7, **dadurch gekennzeichnet**, daß zusätzlich zu den Referenzmerkmalsvektoren auch die einzelnen Merkmale an jedem Gitterpunkt und für jede Auflösungsstufe personenabhängig gewichtet werden und daß auch diese Gewichte der Optimierung unterworfen werden.

9. Verfahren nach einem der Ansprüche 1 bis 8, **dadurch gekennzeichnet**, daß die Merkmalsvektoren nach Auflösungsstufen getrennt berechnet werden und im Optimierungsschritt auch eine optimale Auflösungsstufe ermittelt wird (16, 19 bis 22).

10. Verfahren nach einem der Ansprüche 1 bis 9, **gekennzeichnet durch** die Verwendung der erfaßten und abgespeicherten gesichtsbezogenen Personendaten zur Personenidentifizierung, indem jeweils neu erfaßte Merkmalsdaten mit den gespeicherten Referenzdaten verglichen werden (36 bis 48).

11. Verfahren nach einem der Ansprüche 1 bis 9, **gekennzeichnet durch** die Verwendung der erfaßten und abgespeicherten gesichtsbezogenen Personendaten zur Personenverifizierung, indem jeweils neu erfaßte Merkmalsdaten mit den durch eine zusätzliche persönliche Kennung ausgezeichneten gespeicherten Referenzdaten verglichen werden (31 bis 48).

12. Verfahren nach Anspruch 10 oder 11, **dadurch gekennzeichnet**, daß ein von einer externen Instanz als falsche Zurückweisung klassifizierter Merkmalssatz eines Bildes, das bei dem erfolglosen Versuch einer Personenidentifizierung oder -verifizierung aufgenommen wird, in den Referenzmerkmalssatz der betreffenden Person nachträglich aufgenommen wird und daß mit diesem aktualisierten Referenzmerkmalssatz die Verfahrensschritte Optimierung und Datenspeicherung wiederholt werden.

**Claims**

1. Process for recording personal facial data, characterised by the following process steps:

   - taking several stills of the person to be recorded (1 to 12a),
   - locating the face in the images taken,
   - locating the eyes in the located face (1, 5, 9, 13a), standardising the face by rotation and scaling of the respective image until the eyes lie on a horizontal line with predetermined spacing within the image (13b),
   - extracting features using feature detectors with respect to grid points of a fixed grid, wherein the positions of the grid points are predefined relative to the situation of the eyes, and combining the features to form a feature set for the respective image (13c),
   - calculating a representative reference feature set which compactly combines the feature sets of all images taken (14),
   - optimising person-dependent weights for each reference feature set to optimise a target function representing a function of these weights and the similarity values between the reference feature set and those feature sets obtained from the images taken of the same person and the images of other people from a backup database, and defining an optimum acceptance threshold (15 to 21),
   - storing the facial data of the recorded person obtained in this way (22).

**2.** Process according to claim 1, characterised in that optimisation is carried out only when the feature sets of a predetermined number of people are deposited in the backup database.

**3.** Process according to claim 1 or 2, characterised in that the representative reference feature set is calculated by averaging and standardisation with respect to all images of the person to be recorded (14).

**4.** Process according to claim 1 or 2, characterised in that the representative reference feature set is calculated by derivation of the eigenvector to the maximum eigenvalue of the similarity matrix.

**5.** Process according to claim 3 or 4, characterised in that the feature set S of the feature sets of the images taken which is at the shortest distance from the representative reference feature set in the mathematical space of the feature sets is defined and in that this feature set S is used as the representative reference feature set in the remainder of the process.

**6.** Process according to one of claims 1 to 5, characterised in that the situation of the nose is additionally considered during standardisation of the face and in that the positions of the grid points are additionally defined by the situation of the nose.

**7.** Process according to one of claims 1 to 6, characterised in that, for noise suppression, each image taken is processed by a low-pass filter prior to locating of the face.

**8.** Process according to one of claims 1 to 7, characterised in that, in addition to the reference feature vectors, the individual features are also weighted as a function of the person at each grid point and for each stage of resolution and in that these weights are also optimised.

**9.** Process according to one of claims 1 to 8, characterised in that the feature vectors are calculated separately according to stages of resolution and an optimum stage of resolution is also determined in the optimisation step (16, 19 to 22).

**10.** Process according to one of claims 1 to 9, characterised by the use of the recorded and stored personal facial data for personal identification in that newly recorded feature data is compared in each case with the stored reference data (36 to 48).

**11.** Process according to one of claims 1 to 9, characterised by the use of the recorded and stored personal facial data for personal verification in that newly recorded feature data is compared in each case with the stored reference data marked by an additional personal characteristic (31 to 48).

**12.** Process according to claim 10 or 11, characterised in that a feature set, classified as a false rejection by an external entity, of an image taken during the unsuccessful attempt at personal identification or verification is subsequently taken in the reference feature set of the respective person and that the process steps of optimisation and data storage are repeated with this updated reference feature set.

**Revendications**

**1.** Procédé pour saisir des données relatives au visage de personnes, caractérisé par les étapes suivantes :

- prise de plusieurs images en pied de la personne à acquérir (1 à 12a),
- localisation du visage dans les images prises,
- localisation des yeux dans le visage localisé (1, 5, 9, 13a),
- normalisation du visage au moyen d'une rotation et d'un redimensionnement de l'image correspondante, jusqu'à ce que les yeux dans l'image soient situés sur une ligne horizontale à une distance déterminée (13b),
- extraction de caractéristiques par des détecteurs de caractéristiques par rapport à des points de grille d'une grille fixe, dans laquelle les positions des points de grille par rapport à la position des yeux sont prédéterminées, avec rassemblement des caractéristiques en un jeu de caractéristiques pour l'image correspondante (13c),
- calcul d'un jeu représentatif de caractéristiques de référence qui regroupe d'une manière compacte les jeux de caractéristiques de toutes les images prises (14),
- optimisation de poids dépendant d'une personne pour chaque jeu de caractéristiques de référence en vue de l'optimisation d'une fonction d'objectif qui représente une fonction de ces poids ainsi que des valeurs de ressemblance entre le jeu de caractéristiques de référence et les jeux de caractéristiques qui ont été acquis à partir des images prises de la même personne et des images d'autre personnes dans une banque de données d'arrière-plan, avec une détermination d'un seuil optimal d'acceptation (15 à 31),
- stockage des données relatives au visage ainsi obtenues de la personne saisie (22).

**2.** Procédé selon la revendication 1, caractérisé en ce que l'optimisation est seulement effectuée si dans la banque de données d'arrière-plan les jeux de caractéristiques d'un nombre prédéterminé de personnes sont enregistrés.

3. Procédé selon la revendication 1 ou 2, caractérisé en ce que le calcul du jeu représentatif de caractéristiques de référence a lieu au moyen d'une détermination de moyenne et d'une normalisation par rapport à toutes les images de la personne saisie (14).

4. Procédé selon la revendication 1 ou 2, caractérisé en ce que le calcul du jeu représentatif de caractéristiques de référence a lieu au moyen d'une réorientation du vecteur propre vers la plus grande valeur propre de la matrice de ressemblance.

5. Procédé selon la revendication 3 ou 4, caractérisé en ce qu'on détermine, à partir des jeux de caractéristiques des images prises, le jeu S de caractéristiques qui dans l'espace mathématique des jeux de caractéristiques présente la distance la plus courte avec le jeu représentatif de caractéristiques de référence, et que dans une mise en oeuvre ultérieure du procédé ce jeu S de caractéristiques est utilisé comme jeu représentatif de caractéristiques de référence.

6. Procédé selon l'une des revendications 1 à 5, caractérisé en ce que lors d'une normalisation du visage la position du nez est en outre prise en compte et que les positions des points de grille sont en outre déterminée par la position du nez.

7. Procédé selon l'une des revendications 1 à 6, caractérisé en ce que, pour réduire le bruit, chaque image prise est traité par un filtre passe-bas avant la localisation du visage.

8. Procédé selon l'une des revendications 1 à 7, caractérisé en ce qu'en plus des vecteurs de caractéristiques de référence, les caractéristiques individuelles à chaque point de grille et pour chaque étape de discrimination sont pondérées aussi en fonction des caractéristiques propres à une personne, et que ces poids sont aussi soumis à l'optimisation.

9. Procédé selon l'une des revendications 1 à 8, caractérisé en ce que les vecteurs de caractéristiques sont calculés séparément selon des étapes de discrimination et que dans l'étape d'optimisation, une étape optimale de discrimination est obtenue aussi (16, 19 à 22).

10. Procédé selon l'une des revendications 1 à 9, caractérisé par l'utilisation des données acquises et stockées relatives au visage pour une identification de personne, dans lequel les données correspondantes de caractéristiques nouvellement acquises sont comparées aux données stockées de référence (36 à 48).

11. Procédé selon l'une des revendications 1 à 9, caractérisé par l'utilisation des données acquises et stockées relatives au visage pour une identification de personne, dans lequel les données correspondantes de caractéristiques nouvellement acquises sont comparées à des données stockées de référence sélectionnées par une connaissance supplémentaire personnelle (31 à 48).

12. Procédé selon la revendication 10 ou 11, caractérisé en ce qu'un jeu de caractéristiques, classé comme un faux rejet par une instance extérieure, d'une image qui a été prise lors d'une tentative infructueuse d'une identification ou d'une vérification de personne, est enregistré en complément dans le jeu de caractéristiques de référence de la personne concernée, et qu'avec ce jeu actualisé de caractéristiques de référence, les étapes d'optimisation du procédé et le stockage de données sont répétés.

EP 0 886 833 B1

# FIG 1

KB

CARD → CARD-R

PIN-DAT

CAM → IMPRO ←F-DAT→ MM

CARD-W → CARD'

# FIG 2

KB

CARD → CARD-R

PIN-DAT → MM

F-DAT'

CAM → IMPRO →F-DAT→ COMP → ACC

CARD' → CARD-R' —F-DAT'→

FIG 3a

FIG 3b

FIG 4